(19) **Europäisches Patentamt European Patent Office Office européen des brevets**

(11) **EP 3 669 614 B1**

(12) **EUROPEAN PATENT SPECIFICATION**

(45) Date of publication and mention of the grant of the patent:
**09.03.2022 Bulletin 2022/10**

(21) Application number: **18765200.3**

(22) Date of filing: **14.08.2018**

(51) International Patent Classification (IPC):
***H05B 6/70*** *(2006.01)*

(52) Cooperative Patent Classification (CPC):
**H05B 6/70; H05B 6/68; H05B 6/702; H05B 6/705; H05B 6/72;** Y02B 40/00

(86) International application number:
**PCT/IL2018/050903**

(87) International publication number:
**WO 2019/035130 (21.02.2019 Gazette 2019/08)**

(54) **SIX PORT POWER MEASUREMENTS**

SECHS-AUSGANGS-LEISTUNGSMESSUNGEN

MESURES DE PUISSANCE À SIX PORTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.08.2017 US 201762545608 P**

(43) Date of publication of application:
**24.06.2020 Bulletin 2020/26**

(73) Proprietor: **Goji Limited Hamilton HM 12 (BM)**

(72) Inventor: **ZICKEL, Ben 2702221 Qiryat Bialik (IL)**

(74) Representative: **Korenberg, Alexander Tal et al Kilburn & Strode LLP Lacon London 84 Theobalds Road London WC1X 8NL (GB)**

(56) References cited:
**EP-A1- 1 280 392        EP-A1- 1 676 463
EP-A2- 1 471 773        WO-A1-03/090313
WO-A1-2016/196939      CN-U- 203 481 385
JP-A- 2008 034 244**

## Description

### FIELD AND BACKGROUND OF THE INVENTION

The present invention, in some embodiments thereof, relates to the field of controlling heating using sensors, and more particularly, but not exclusively, for using RF for the sensing and/or for the heating.

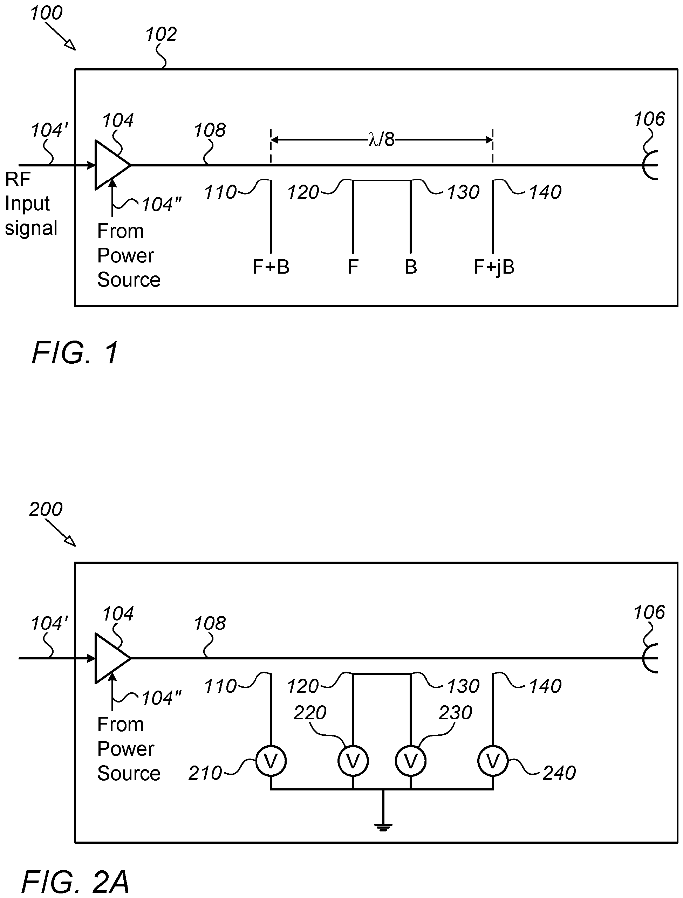

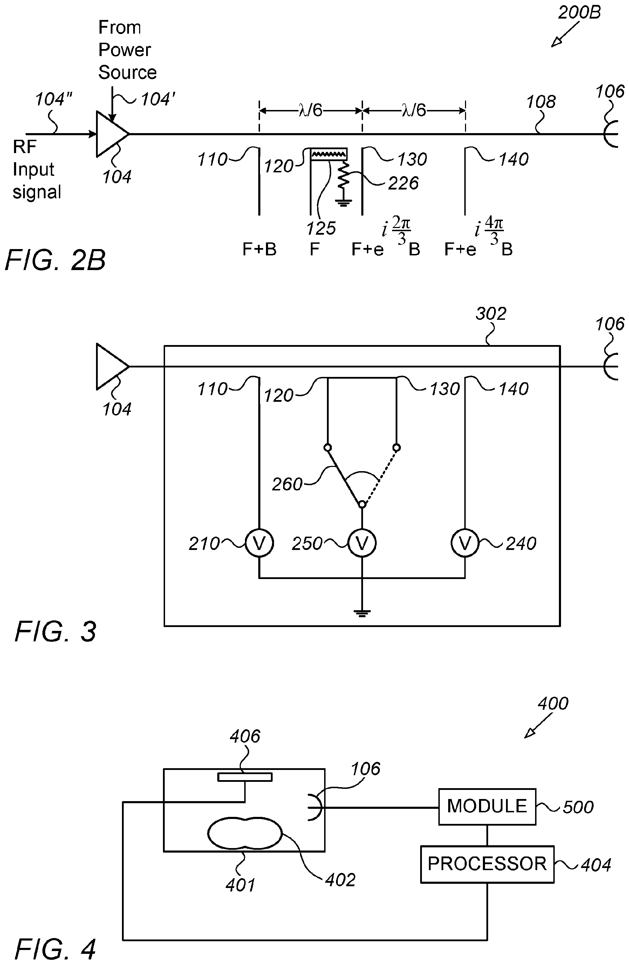

European patent application No. 2199753 is titled "Fluid cylinder with a microwave measuring assembly and method for recording at least one parameter". Fig. 2 in this patent application describes an evaluation device arranged on a printed circuit board. The evaluation device includes a six-port circuit comprising four power measurement ports.

WO 03/090313 describes a transceiver for a millimeter wave signal, consisting of a PCB having PCB microstrip lines and PCB waveguide apertures, and one or more transmitter modules and one or more receiver modules mounted on the PCB. Each module has a single microstrip-waveguide transition and a microstrip-microstrip transition. The microstrip-waveguide transition of each module couples to one of the PCB waveguide apertures via a PCB-module waveguide-waveguide transition. The microstrip-microstrip transition of each module couples to one of the PCB microstrip lines via a PCB-module microstrip-microstrip transition. The PCB-module transitions are low tolerance, facilitating implementation of the transceiver.

EP 1471773 describes distributed high power solid state microwave sources provided to improve the efficiency of microwave heating applications. A plurality of solid state microwave sources are be distributed throughout and/or adjacent to a microwave environment with the microwave power output of the solid state microwave sources being directed toward the chamber. The distribution of the plurality of solid state microwave devices can be customized to the specific size and shape of the microwave chamber and/or specific regions/ compartments of the microwave chambers.

EP 1676463 describes a surface-heating system which heats a surface with a high-power wavefront at a millimeter-wave frequency. The high-power wavefront may be a collimated wavefront or a converging or diverging wavefront. In some embodiments, the system includes a frequency generator to generate a lower-power millimeter-wave frequency signal, and an active-array antenna system to amplify the millimeter-wave frequency and generate the high-power wavefront in a direction of a surface for heating the surface. In other embodiments, a frequency generator and power amplifier may generate a high-power power millimeter-wave frequency signal, and a passive-array antenna system may provide the high-power wavefront in a direction of the surface. In some embodiments, a thermal-sensing subsystem may measure the surface temperature and generate a control signal to maintain the surface temperature within a predetermined temperature range.

### SUMMARY

Some examples of embodiments of the invention follows. It should be noted that some embodiments of the invention include features from multiple examples and/or can include fewer than all features described in one example.

Unless otherwise defined, all technical and/or scientific terms used herein have the same meaning as commonly understood by one of ordinary skill in the art to which the present disclosure pertains. Although methods and materials similar or equivalent to those described herein can be used in the practice or testing of embodiments of the present disclosure, exemplary methods and/or materials are described below. In case of conflict, the patent specification, including definitions, will control. In addition, the materials, methods, and examples are illustrative only and are not intended to be necessarily limiting.

As will be appreciated by one skilled in the art, aspects of the present disclosure may be embodied as a system, method or computer program product. Accordingly, aspects of the present disclosure may take the form of an entirely hardware embodiment, an entirely software embodiment (including firmware, resident software, microcode, etc.) or an embodiment combining software and hardware aspects that may all generally be referred to herein as a "circuit," "module" or "system" (e.g., a method may be implemented using "computer circuitry"). Furthermore, some embodiments of the present disclosure may take the form of a computer program product embodied in one or more computer readable medium(s) having computer readable program code embodied thereon. Implementation of the method and/or system of some embodiments of the present disclosure can involve performing and/or completing selected tasks manually, automatically, or a combination thereof. Moreover, according to actual instrumentation and equipment of some embodiments of the method and/or system of the present disclosure, several selected tasks could be implemented by hardware, by software or by firmware and/or by a combination thereof, e.g., using an operating system.

For example, hardware for performing selected tasks according to some embodiments of the present disclosure could be implemented as a chip or a circuit. As software, selected tasks according to some embodiments of the present disclosure could be implemented as a plurality of software instructions being executed by a computer using any suitable operating system. In some embodiments of the present disclosure, one or more tasks performed in method and/or by system are performed by a data processor (also referred to herein as a "digital processor", in reference to data processors which operate using groups of digital bits), such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well. Any of these implementations are referred to herein more generally as instances of computer circuitry.

Any combination of one or more computer readable medium(s) may be utilized for some embodiments of the present disclosure. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device .

A computer readable storage medium may also contain or store information for use by such a program, for example, data structured in the way it is recorded by the computer readable storage medium so that a computer program can access it as, for example, one or more tables, lists, arrays, data trees, and/or another data structure. Herein a computer readable storage medium which records data in a form retrievable as groups of digital bits is also referred to as a digital memory. It should be understood that a computer readable storage medium, in some embodiments, is optionally also used as a computer writable storage medium, in the case of a computer readable storage medium which is not read-only in nature, and/or in a read-only state.

Herein, a data processor is said to be "configured" to perform data processing actions insofar as it is coupled to a computer readable memory to receive instructions and/or data therefrom, process them, and/or store processing results in the same or another computer readable storage memory. The processing performed (optionally on the data) is specified by the instructions. The act of processing may be referred to additionally or alternatively by one or more other terms; for example: comparing, estimating, determining, calculating, identifying, associating, storing, analyzing, selecting, and/or transforming. For example, in some embodiments, a digital processor receives instructions and data from a digital memory, processes the data according to the instructions, and/or stores processing results in the digital memory. In some embodiments, "providing" processing results comprises one or more of transmitting, storing and/or presenting processing results. Presenting optionally comprises showing on a display, indicating by sound, printing on a printout, or otherwise giving results in a form accessible to human sensory capabilities.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium and/or data used thereby may be transmitted using any appropriate medium, including but not limited to wireless, wireline, optical fiber cable, RF, etc., or any suitable combination of the foregoing.

Computer program code for carrying out operations for some embodiments of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider(

Some embodiments of the present disclosure may be described below with reference to flowchart illustrations and/or block diagrams of methods, apparatus (systems) and computer program products according to embodiments of the present disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

## BRIEF DESCRIPTION OF THE DRAWINGS

Some embodiments of the present disclosure are herein described, by way of example only, with reference to the accompanying drawings. With specific reference now to the drawings in detail, it is stressed that the particulars shown are by way of example, and for purposes of illustrative discussion of embodiments of the present disclosure. In this regard, the description taken with the drawings makes apparent to those skilled in the art how embodiments of the present disclosure may be practiced.

In the drawings:

Each of figures 1, 2A, 2B, and 3 is a diagrammatic illustration of a solid state microwave module according to embodiments of the invention;

Fig. 4 is a diagrammatic representation of an apparatus for heating an object in a heating cavity by a heating unit, and comprising a module according to some embodiments of the invention.

## DETAILE DESCRIPTION OF EXEMPLARY EMBODIMENTS OF THE INVENTION

In the present description, the word "exemplary" is used in the sense of may be serving as an example, instance, or illustration and not necessarily as deserving imitation.

The present invention, in some embodiments thereof, relates to the field of controlling heating using sensors, and more particularly, but not exclusively, for using RF for the sensing and/or for the heating.

### *Overview*

An aspect of some embodiments of the inventions includes a solid state microwave module. The word module is used herein to refer to a functional assembly of electronic components. The module may be designed for use with other modules, of similar or different functionality. A solid state microwave module according to embodiments of the present invention includes one or more printed circuit boards (PCBs), connected to one another through mechanical fixtures with only TEM and/or quasi-TEM connections between components assembled on the one or more PCBs.

In some embodiments, a microwave solid state amplifier is assembled to the one or more PCBs, and connected to an antenna interface via a transmission line printed on the one or more PCBs. The transmission line is preferably a TEM and/or quasi-TEM transmission line. The antenna interface may include a connector to an antenna and/or make part of the antenna itself. In operation, signals amplified by the solid state amplifier may be transmitted by the antenna into an energy application zone having in it an object to be heated and/or sensed by those signals. The module also includes four ports printed on the one or more PCBs. The ports are configured to couple to at least one power meter different portions of microwave signals going through the transmission line. Each port is configured to couple to the at least one power meter a respective and different portion of the signal. As used herein, this arrangement may be referred to as a 6 point coupler, having one port coupled to the power amplifier, one port coupled to the antenna interface, and four measurement points, coupled to the one or more power meters. As for the "one or more power meters", there may be a separate power meter for each measuring port (i.e., four power meters), there may be a single power meter, coupled (e.g., by a switch) at different times to different ones of the measuring ports, or there may be two or three power meters, with two switches. The one or more power meters may be assembled to the one or more PCBs, or may be separated therefrom. In some embodiments, some are assembled and some are not.

For example, one port may be configured to couple to the power meter a forward signal F (i.e., a signal going from the amplifier towards the antenna interface). Another port may be configured to couple to the power meter a backward signal B (i.e., a signal going from the antenna back towards the amplifier.) The third and fourth ports, in this example, may each couple to the at least one amplifier a respective linear combination of the forward and backward signals, e.g., a first linear combination of the forward and backwards signals (F+B) and a second linear combination of them (e.g., F+jB, where j is the square root of -1).

In another example, the four ports may be configured to couple to the at least one power meter the signals F, F+B, $F+(2\pi j/3)B$, and $F+(4\pi j/3)B$. This example may be advantageous over the former one in that it does not require coupling into the only one pure signal (the backward signal). On the other hand, the first example may be embodied in a smaller four-port coupler, that is, with smaller distance between the two furthers measurement ports. For example, the latter example may require spacing the two furthest ports $\lambda/3$ from each other, while in the former example, $\lambda/8$ suffices. Here and elsewhere in the description and the claims, $\lambda$ stands for a wavelength in vacuum of the forward signal.

As used herein, if a machine (e.g., a port) is described as being "configured to" perform a particular task (e.g., configured to couple a signal to a power meter), the machine includes components, parts, or aspects (e.g., software) that enable the machine to perform the particular task. In some embodiments, the machine may perform this task during operation.

As used herein, the term measurement port refers to any conductive region printed on the PCB, which is significantly smaller (i.e., at least 10 times smaller) than the working signal wavelength in the PCB, in which the electric field is sufficiently strong to make the required measurement. The size of a conductive region is the longest straight line connecting two points on the edge of the region.

A measurement port coupled to a transmission line is a measurement port which is located near a transmission line such that the electrical field emanating from the transmission line is sufficiently strong to make the required measurement at the port.

The measurements of the signals coupled through the four measurement ports may enable one to characterize the entire microwave transmission system, e.g., including the antenna, the energy application zone, and the object. For example, the measurements may allow calculating the scattering parameters of the system, the voltages at any point along the transmission line, and the currents at any point along the transmission line. The voltages and currents (or, alternatively, the input power from the amplifier and the scattering parameters) may be used in some embodiments to protect the power amplifier from electrical and thermal over stress. For example, a processor controlling the power amplifier may be configured (e.g., by suitable programming) to ensure, based on the measurements, that critical voltages and/or currents don't arrive at the amplifier. Knowing the scattering parameters allows, in some embodiments, characterization of the object (e.g., by comparing the scattering parameters measured at a variety of frequencies to those measured in the same system for known objects). Then, heating of the object may be controlled based on the characterization of the object. For example, a first heating protocol may be applied to an object characterized as a frozen pizza, and a second heating protocol (different from the first) may be applied to an object characterized as not yet cooked bread. The heating itself may be by microwaves, generated using the same solid state amplifier, a different microwave source (e.g., a magnetron), or a combination thereof. Additionally or alternatively, the heating may be by means of hot air (e.g., convection), IR radiation, or any other heating means known in the art as such. In case microwaves from a solid state source are used to heat the object, a frequency-by frequency decision may be made to decide if to use any one of the frequencies for heating, and if so, for how long and/or at what power level. Such decisions may be made, for example, based on a desire to allow the same amount of energy to be absorbed by the system in each of the frequencies used.

As used herein, the term "processor" may include an electric circuit that performs a logic operation on input or inputs. For example, such a processor may include one or more integrated circuits, microchips, microcontrollers, microprocessors, all or part of a central processing unit (CPU), graphics processing unit (GPU), digital signal processors (DSP), field-programmable gate array (FPGA) or other circuit suitable for executing instructions or performing logic operations.

The instructions executed by the processor may, for example, be pre-loaded into the processor or may be stored in a separate memory unit such as a RAM, a ROM, a hard disk, an optical disk, a magnetic medium, a flash memory, other permanent, fixed, or volatile memory, or any other mechanism capable of storing instructions for the processor. The processor(s) may be customized for a particular use, or can be configured for general-purpose use and can perform different functions by executing different software.

The term "processor" is used to mean one or more processors. If more than one processor is employed, all may be of similar construction, or they may be of differing constructions electrically connected or disconnected from each other. They may be separate circuits or integrated in a single circuit. When more than one processor is used, they may be configured to operate independently or collaboratively. They may be coupled electrically, magnetically, optically, acoustically, mechanically or by other means permitting them to interact.

The present invention includes an apparatus for heating an object by a heating unit using a module as described above. In some embodiments, the apparatus further includes a processor, configured to control the heating unit based on measurements received from the four measurement ports. For example, the processor may be configured to process the measurement results using non-iterative processing methods, and send control signals to the heating unit based on the processed results. Alternatively or additionally, the processor may be configured to calculate, based on the input received from the above-described microwave module, the real forward and backward signals, their amplitude, and/or the phase difference between them. The real signals are characterized by amplitude and phase at the entrance to the energy application zone, rather than at any point along the path between the amplifier and the antenna interface, as may be measured by the module. The real phase may be, for example, a phase difference between forward and backward signals and/or relative phase between different signals, in case more than one antenna is used. In embodiments where several antennas are used, each antenna may be connected to a feeding amplifier via a six-port measurement device as described above. Calculating the real values may be important for comparing with previously measured signals, for example, previously measured signals to be used as "finger prints" to the object inside the energy application zone. In another example, the real values of the signals may be used to carry out a pre-determined heating scheme. Providing heating schemes in real values (rather than measured values) may be beneficial, because the differences between measured and real values may change during the operation of the oven, e.g., because of heating of the amplifier, heating of any other component, age of the module, etc.

In some embodiments, the processor may be configured to determine the actual power of the forward and backward signal by a method comprising (or being mathematically equivalent to) multiplying a predetermined $2 \times 4$ matrix by a measured 4 dimensional vector, each component of which is a result received from a respective one of the measuring ports. The determination of the matrix may be referred to as a calibration of the module. The matrix may be determined (i.e., the module may be calibrated) by measuring the actual forward and reverse waves, when RF power is applied through the module to four different calibration loads (e.g., open, short, and two different loads; or non-reflective load and three fully reflective loads with 0, 120, and 240 degrees phase, or any other four mutually different calibration loads), and solving the appropriate equations.

***Exemplary microwave modules***

Fig. 1 is a diagrammatic illustration of a solid state microwave module 100 according to some embodiments of the invention. Module 100 includes one printed circuit boards (PCB) 102, but the invention is not limited to modules that lie on a single PCB, and a module may also include a plurality of PCBs. Module 100 includes a microwave solid state amplifier 104 and an antenna interface 106 assembled to PCB 100. Amplifier 104 receives an RF signal (via input 104') and a DC signal from a power source (via input 104"), and outputs an amplified RF signal to transmission line 108. In some embodiments, the RF signal source (not shown), whose output is inputted to amplifier 104 via input 104' may be assembled to PCB 102. In some embodiments, it may be external to the PCB. Similarly, the DC power source (not shown), whose output is inputted to amplifier 104 via input 104" may be assembled to PCB 102 in some embodiments, or external to the PCB in some embodiments. Antenna interface 106 may include a connector configured to connect to an antenna, or the antenna itself, connected directly (e.g., by soldering) to the PCB. Amplifier 104 and antenna interface 106 are interconnected via transmission line 108. Transmission line 108 may be a TEM or semi-TEM transmission line, or may include TEM parts and semi-TEM parts. Finally, PCB 100 includes four measurement probes (110, 120, 130, 140) configured to couple respective different portions of microwave signals going through transmission line 108 to at least one power meter (not shown in Fig. 1). To be so configured, the measurements are disposed along transmission line 108 so that a distance between the two furthest ports (110 and 140) is smaller than a wavelength. In some embodiments, measurement ports 120 and 130 form together a bidirectional coupler. The directivity of the bidirectional coupler is preferably worse than 20 dB, e.g., 15 dB or worse. Each of the measurements ports 110, 120, 130, and 140 includes a conductive region printed on the PCB, which is significantly smaller (i.e., at least 10 times smaller) than the quasi-TEM working signal wavelength in the PCB, provided that the electrical field generated by signals running between the amplifier and the antenna interface is sufficiently strong in this region to allow the at least one power meter measurement to measure the power of these signals. While Fig. 1 is not necessarily to scale, it does show that the distance between the two furthest measurement ports (110 and 140) is 1/8 of a wavelength of a frequency of a signal running in transmission line 108. It is noted that module 100 may be configured to work with various frequencies, for example, with an entire ISM bands (e.g., between 2400 MHz and 2500 MHz, and/or between 900 MHz and 928 MHz) or even at broader frequency ranges, for example, when the module is used for working at low powers which do not impose too strict regulatory restrictions. Such a sensing frequency range may be, for example between 0.5 GHz and 10 GHz, e.g., between 1 and 5 GHz. Whenever the module is described herein in relation to "the wavelength", this is the central wavelength (e.g., 2450 MHz and 915 MHz in the above examples of ISM bands, or 5.25 GHz and 3 GHz in the above examples of sensing frequency bands, respectively).

In some embodiments, one or more of the measurement ports include an insulator between transmission line 108 and the at least one power meter. For example, in Fig. 1, port 110 may include a gap between transmission line 108 and transmission line 112 going from that gap towards the at least one power meter. This gap is insulating, for example, if it has air in it, or is filled with any other dielectric material.

Fig. 2A is a diagrammatic illustration of a microwave module 200 according to some embodiments of the invention. The module of Fig. 2A is similar to that of Fig. 1, but includes four power meters: 210, 220, 230, and 240, assembled to the one or more PCBs that make module 200. The four measurement ports 110, 120, 130, and 140, couple the signals going through transmission line 108 to the four power meters 210, 220, 230, and 240, respectively.

The measurement ports may be positioned so as to couple to the at least one power meter four different linear combinations of measured forward and backward signals. As used herein, a forward signal is one that goes in transmission line 108 along a direction going from power amplifier 104 to antenna interface 106. The term "measured signal" is used to refer to the size of the signal as measured. As the measurement device (e.g., each of the power meters) may be influenced by signals additional to the one that the measurement device is supposed to measure, there may be room to calculate an actual signal, which is the forward signal that actually reached the antenna interface from the amplifier or the backward signal that actually emanated towards the amplifier from the antenna interface. For example, the measured signals coupled to the power meters in Fig. 2A are: the forward signal to port 120; the backward signal coupled to port 130, a sum of the forward and backward signal is coupled to port 110, and a sum of the forward signal and 90 degrees shifted backwards signal, as summarized in Table 1, where F stands for forward; B for backwards, and j for the square root of -1. The parameters $\alpha$ and $\beta$ are the coefficients in the linear combinations

Table 1

| Port | Signal | $\alpha$ | $\beta$ |
|------|--------|----------|---------|
| 110 | F+B | 1 | 1 |
| 120 | F | 1 | 0 |
| 130 | B | 0 | 1 |
| 140 | F+jB | 1 | j |

It is noted that the signals coupled to the various power meters are not necessarily as detailed in Table 1: the calculation detailed below is valid, for every signal combination at which the M matrix defined below is invertible.

Fig. 2B is a diagrammatic illustration of a microwave module 200B according to some embodiments of the invention. The module of Fig. 2B is similar to that of Fig. 1, and includes four measurement ports 110, 120, 130, and 140, spaced away from each other so as to couple to the at least one power meter (not shown) different signals. However, none of the ports in Fig. 2B form together a bidirectional coupler. Port 120 is connected to a short conducting strip 125 parallel to transmission line 108. Strip 125 is terminated by a load 226.

The measurement ports in Fig. 2B are positioned so as to couple to the at least one power meter four different linear combinations of measured forward and backward signals. The distances between port 110, 130, and 140 are $\lambda/6$, and port 120 is between port 110 and port 130, for example, at a distance of $\lambda/12$ from each of them. The measured signals coupled to the power meters in Fig. 2B are: the forward signal to port 120; and three different complex summations of the forward and backward signals to ports 110, 130, and 140. The signals coupled to the measurement ports in Fig. 2B are summarized in Table 1, where F stands for forward; B for backwards, and j for the square root of -1. The parameters $\alpha$ and $\beta$ are the coefficients in the linear combinations

Table 2

| Port | Signal | $\alpha$ | $\beta$ |
|------|--------|----------|---------|
| 110 | F+B | 1 | 1 |
| 120 | F | 1 | 0 |
| 130 | $F+e^{j\frac{2\pi}{3}}B$ | 1 | $e^{j\frac{2\pi}{3}}$ |
| 140 | $F+e^{j\frac{4\pi}{3}}B$ | 1 | $e^{j\frac{4\pi}{3}}$ |

The four different measurements may be useful for solving four linear equations for telling the real powers based on the measured ones. Such a set of four equations is developed, for example, below.

The outputs at coupler ports 110 to 140 are each a unique combination of the forward (denoted by F) and backward (denoted by B) waves present at the antenna interface and can be written as $V_i = \alpha_i F + \beta_i B$ where all the quantities are complex numbers.

The values of the four $\alpha_i$ and $\beta_i$ in the above example are also summarized in Table 1.

The resulting powers measured at each power meter are

$$P_i = |V_i|^2 = \left| |\alpha_i| \, |F| + \gamma_i |B| \exp\left[i\big(\theta(B) - \theta(F)\big)\right] \right|^2$$

where we have defined the fixed quantity

$$\gamma_i = |\beta_i| \exp\left[i\left(\theta(\beta_i) - \theta(\alpha_i)\right)\right]$$

and $\theta(c)$ denotes the angle of the complex number c. We now define two fixed real valued quantities

$$u_i = Re(\gamma_i) = |\beta_i| \cos\left(\theta(\beta_i) - \theta(\alpha_i)\right)$$

$$v_i = Im(\gamma_i) = |\beta_i| \sin\left(\theta(\beta_i) - \theta(\alpha_i)\right)$$

and two real valued quantities that depend only on the forward and backward waves

$$X = Re\big(|B| \exp[i(\theta(B) - \theta(F))]\big) = |B| \cos\big(\theta(B) - \theta(F)\big)$$

$$Y = Im\big(|B| \exp[i(\theta(B) - \theta(F))]\big) = |B| \sin\big(\theta(B) - \theta(F)\big)$$

This results in the following expression for the measured powers

$$P_i = \left| |\alpha_i| \, |F| + (u_i + iv_i)(X + iY) \right|^2$$

$$= |(|\alpha_i| \, |F| + u_i X - v_i Y) + i(u_i Y + v_i X)|^2$$

$$= |\alpha_i|^2 |F|^2 + \big(u_i^2 + v_i^2\big)(X^2 + Y^2) + 2|\alpha_i| \, u_i \, |F| X + 2|\alpha_i| \, v_i \, |F| Y$$

$$= |\alpha_i|^2 |F|^2 + \big(u_i^2 + v_i^2\big)|B|^2 + 2|\alpha_i| \, u_i \, |F| X + 2|\alpha_i| \, v_i \, |F| Y$$

By defining the column vector $\overrightarrow{W}$ to be

$$\overrightarrow{W} = \begin{bmatrix} |F|^2 \\ |B|^2 \\ |F|X \\ |F|Y \end{bmatrix}$$

and a matrix M with line i equal to

$$M_i = \left[ |\alpha_i|^2 \quad (u_i^2 + v_i^2) \quad 2|\alpha_i| \, u_i \quad 2|\alpha_i| \, v_i \right]$$

one can obtain all the power readings for a single set of forward and backward waves by the following matrix multiplication

$$\begin{bmatrix} P_1 \\ P_2 \\ P_3 \\ P_4 \end{bmatrix} = \vec{P} = M\vec{W} = M \begin{bmatrix} |F|^2 \\ |B|^2 \\ |F|X \\ |F|Y \end{bmatrix}$$

It is noted that M is a matrix that characterizes the module (e.g., module 200) and is independent on the signals. This is evident from the matrix M being related only to the parameters $\alpha_i$ and $\beta_i$ of the six port coupler. When the matrix M can be inverted, the actual forward and backward waves can be obtained by a simple matrix multiplication

$$\vec{W} = M^{-1}\vec{P}$$

which can be written explicitly in order to obtain forward and backward wave powers as

$$|F|^2 = \sum_{k=1}^{4} [M^{-1}]_{1,k}\vec{P}_k$$

$$|B|^2 = \sum_{k=1}^{4} [M^{-1}]_{2,k}\vec{P}_k$$

In some embodiments of the invention, the linear combinations (or, equivalently, the values for $\alpha_i$ and $\beta_i$) are selected so as to control (e.g., minimize) the overall size of the module.

One useful measure of the size of a module is the minimal total length of transmission lines needed in order to build it. A length is "minimal" if it does not include transmission line portions the lengths of which do not affect the functioning of the module. For example, in the modules of Figures 1 and 2, the size of the module is, under that definition, $\lambda/8$, where $\lambda$ is the wavelength of the signals in the PCB. In some embodiments of the invention, the module is designed to have a size of between about λ/8 and about λ/4. In some embodiments, the module is designed to have a minimal possible size, e.g., by selecting positions to the measurement so as to minimize the size of the module.

In some embodiments, the four ports (e.g., 110, 120, 130, 140) are arranged to allow transforming power levels measured by the at least one amplifier to actual power levels by a linear transformation (e.g., embodied in matrix $M^{-1}$ above) having a condition number between 4 and 5.

The solid state microwave module described herein may be included in a microwave oven, for example, for heating objects in the oven's cavity. In such embodiments, the solid state amplifier is configured to output microwaves having power of at least 100W, for example, 100W, 150W, 200W, 500W, 1000W, 2000W, or any other power in between 100W and 2000 W.

In some embodiments, the solid state microwave module described herein may be used for sensing, for example, for sensing objects to be heated in a cavity. The heating itself may be carried out by microwave, convection, IR radiation, or any other heating method known in the art. Sensing may be achieved with much lower power levels than those required for heating. Accordingly, in some embodiments (e.g., where the module is used for sensing), the solid state amplifier is configured to output microwaves having power of between 0.1mW and 100mW. Some possible powers include 0.1mW, 0.5mW, 1mW, 2mW, 10mW, 50mW, 100mW, or any other power in between.

Fig. 3 is a diagrammatic illustration of a microwave module comprising one or more PCBs 302 according to some embodiments of the invention. While in Figure 2A, each port connects transmission line 108 to a corresponding voltmeter, in Fig. 3, two ports (120 and 130) are connected to a single voltmeter 250 via switch 260, that has at least one state at which one of the ports is connected to the voltmeter and the other is disconnected from the voltmeter, and at least one state at which the other port is connected to the voltmeter, and the one of the ports is disconnected from the voltmeter. The two other ports (110 and 140) are connected each to a different (dedicated) voltmeter (210 and 240). In some embodiments, all the voltmeters are connected to the same ground.

### *Exemplary heating apparatus*

Fig. 4 is a diagrammatic representation of apparatus 400 for heating an object 402 in a heating cavity 401 by a heating unit 406. Apparatus 400 includes a solid state microwave module 500, processor 404, configured (e.g., by proper programming) to receive measurement results from module 500 and send control signals to heating unit 406 based on the received inputs. In some embodiments, cavity 401 is a resonator, that resonates in one or more frequencies of microwaves supplied via module 500. The control signals sent to heating unit 406 based on the received inputs may include for example, at what power to heat, for how long, at what frequency (e.g., if heating unit 406 is a variable frequency microwave heater), etc.. The processor may be configured to change the control signals based on changes in the measurements received from module 500. In some embodiments, the measurements received from module 500 may be frequency dependent, and the measurements in the different frequencies may form a pattern (e.g., a pattern of scattering parameters vs. frequency). In some embodiments, such patterns are identified in advance to be indicative to the object being heated and/or to a property of the object. A pattern recognition module in the processor may then recognize the pattern of the received measurements to match a pattern indicative of a certain object and/or property thereof, and send the control signals accordingly. In some embodiments, the processor may receive (e.g., via a user interface) information regarding the object (e.g., that it is a frozen pizza), and use the measurements to tell a property of the object (e.g., that the frozen pizza is at a certain temperature, for example, -20°C, -4°C, etc.). In some embodiments, module 500 provides microwave output at low power (e.g., between 0.0001W and 0.01W), and used only for sensing, in the sense of transmitting these low power microwave signals into cavity 101, receiving feedback from the cavity in the form of signals returning from the cavity to the module, and providing data indicative of said transmitting and receiving to the processor. The processor may process such data to identify, e.g., kind and/or property of the object in the cavity.

Module 500 may include a solid state microwave power amplifier (e.g., 104) assembled to one or more PCBs. In some embodiments, the solid state power amplifier is configured to be fed with RF signals having a variety of different frequencies, and amplify them. A six port coupler may be printed on the one or more PCBs, and this six port coupler may include one port connected to the power amplifier via a TEM or quasi-TEM transmission line. In some embodiments, another one of the six ports of the coupler is connected to an antenna interface (106), e.g., via a TEM or quasi-TEM transmission line. The six port coupler may also include four measurement ports, each connected to a power meter, and the processor receives these measurements as inputs. In some embodiments, module 500 is the same as described above, for example, the same as module 100, 200, or 300. In some embodiments, the output of module 500 may be used for heating object 402. In some such embodiments, heating unit 406 is the same as module 500. In some embodiments, module 500 is used for heating, and heating unit 406 is an additional heating unit.

In some embodiments, processor 404 is configured to process the measurement results using a non-iterative processing method to obtain processed results, and send the control signals based on the processed results. The non-iterative processing method may include, determining, based on the received measurement results, an actual power of the forward signal and an actual power of the backward signal by multiplying a predetermined $4 \times 4$ matrix by a measured 4 dimensional vector, each component of which is a result received from a respective one of the four ports.

The predetermined matrix may characterize the six port coupler, for example, as the above-mentioned matrix $M$ (or $M^{-1}$) does. An example of the measured four dimensional vector may be the above-mentioned results vector $\vec{P}$ and matrix $M^{-1}$. In some embodiments, other mathematical methods, mathematically equivalent to such a multiplication of a result vector by a predetermined matrix may be similarly used.

In some embodiments, the processor may be configured to determine a property of the object being heated in the oven based on the received measurement results. For example, the frequency dependence of the return loss of the heating chamber with the object therein may be indicative to a property of the object, if, for example, the object itself is known, e.g., based on input received from a user. The return loss may be the real return loss, that is, the ratio between real forward and real backward signals. In some embodiments, more than one module 500 is provided (e.g., two such modules), and coupling between them may be used for evaluating, for example S parameters (e.g., a ratio between a real forward signal going out of an antenna of one module, and a real backward signal going into an antenna of another module at the same time and frequency, and when no module other than the first is outputting signals at that frequency).

In some embodiments, heating unit 406 heats object 402 by microwaves, e.g., microwaves generated by a magnetron and/or by microwaves amplified by a solid state amplifier, e.g., the solid state amplifier of module 500. In some embodiments, in addition to or instead of heating by microwave, heating unit 406 heats object 402 by means other than microwave, e.g., blowing hot air into the cavity, radiating infrared radiation, etc..

*General*

As used herein with reference to quantity or value, the term "about" means "within $\pm 10\%$ of."

The terms "comprises", "comprising", "includes", "including", "having" and their conjugates mean: "including but not limited to."

As used herein, the singular form "a", "an" and "the" include plural references unless the context clearly dictates otherwise.

The word "optionally" is used herein to mean "is provided in some embodiments and not provided in other embodiments". Any particular embodiment of the present disclosure may include a plurality of "optional" features except insofar as such features conflict.

Throughout this application, embodiments may be presented with reference to a range format. It should be understood that the description in range format is merely for convenience and brevity and should not be construed as an inflexible limitation on the scope of descriptions of the present disclosure. Accordingly, the description of a range should be considered to have specifically disclosed all the possible subranges as well as individual numerical values within that range. For example, description of a range such as "from 1 to 6" should be considered to have specifically disclosed subranges such as "from 1 to 3", "from 1 to 4", "from 1 to 5", "from 2 to 4", "from 2 to 6", "from 3 to 6", etc.; as well as individual numbers within that range, for example, 1, 2, 3, 4, 5, and 6. This applies regardless of the breadth of the range.

Whenever a numerical range is indicated herein (for example "10-15", "10 to 15", or any pair of numbers linked by these another such range indication), it is meant to include any number (fractional or integral) within the indicated range limits, including the range limits, unless the context clearly dictates otherwise. The phrases "range/ranging/ranges between" a first indicate number and a second indicate number and "range/ranging/ranges from" a first indicate number "to", "up to", "until" or "through" (or another such range-indicating term) a second indicate number are used herein interchangeably and are meant to include the first and second indicated numbers and all the fractional and integral numbers therebetween.

Although descriptions of the present disclosure are provided in conjunction with specific embodiments, it is evident that many alternatives, modifications and variations will be apparent to those skilled in the art.

In addition, citation or identification of any reference in this application shall not be construed as an admission that such reference is available as prior art to the present disclosure. To the extent that section headings are used, they should not be construed as necessarily limiting.

It is appreciated that certain features which are, for clarity, described in the present disclosure in the context of separate embodiments, may also be provided in combination in a single embodiment. Conversely, various features, which are, for brevity, described in the context of a single embodiment, may also be provided separately or in any suitable subcombination or as suitable in any other described embodiment of the present disclosure. Certain features described in the context of various embodiments are not to be considered essential features of those embodiments, unless the embodiment is inoperative without those elements.

## Claims

1. An apparatus (400) for heating an object (402) by a heating unit (406), the apparatus comprising:

   a solid state microwave module (100, 200, 200B, 300, 500) comprising one or more printed circuit boards, PCBs, (102, 302), wherein:
   a solid state microwave power amplifier (104) is assembled to the one or more PCBs; and a six port coupler is printed on the one or more PCBs, wherein one port of the six port coupler is connected to the power amplifier via a TEM or quasi-TEM transmission line; and
   a processor (404) configured to:

   receive measurement results from at least one power meter receiving inputs from four ports of the six port coupler, and
   based on the results received, send control signals to control the heating unit.

2. The apparatus (400) of claim 1, wherein one port of the six port coupler is connected to an antenna interface (106) via a TEM or quasi-TEM transmission line.

3. The apparatus (400) of claim 2, further comprising a microwave antenna connected to the antenna interface (106) and configured to feed a heating cavity (401) with microwaves.

4. The apparatus (400) of any one of claims 1 to 3, wherein the processor (404) is configured to:

   process the measurement results using a non-iterative processing method to obtain processed results, and
   send the control signals based on the processed results.

5. The apparatus of any one of claims 1 to 4, wherein the four ports (110, 120, 130, 140) couple to the at least one power meter four different linear combinations of

a measured forward signal going from the power amplifier to the antenna and
a measured backward signal going from the antenna to the power amplifier.

6. The apparatus of any one of claims 1 to 5, wherein:

   the six port coupler is arranged to allow transforming power levels measured by the at least one power meter to actual power levels by a linear transformation having a condition number between 4 and 5; and/or wherein the total length of the six port coupler is between $\lambda/8$ and $\lambda/4$, wherein $\lambda$ is a wavelength in vacuum of a microwave signal that the power amplifier is configured to amplify.

7. The apparatus of any one of claims 1 to 6, wherein a ratio between an amplitude of forward and backward signals at one port is different from the same ratio at one or more of the other ports.

8. The apparatus of any one of claims 1 to 7, wherein the four ports (110, 120, 130, 140) include:

   a first port (120) coupling to the power meter the measured forward signal;
   a second port (130) coupling to the power meter the measured backward signal;
   a third port (110) and a fourth port (140), each coupling to the power meter a summation of the measured forward signal and the measured backward signal; the fourth port being distanced from the third port by $\lambda/8$, wherein $\lambda$ is a wavelength in vacuum of the forward signal.

9. The apparatus of claim 8, wherein the first port and second port form together a bidirectional coupler.

10. The apparatus of any one of claims 1 to 9, wherein at least two metering ports out of the four metering ports (110, 120, 130, 140) are connected to a same power meter, and wherein the at least two of the four ports are connected to the same power meter through a switch (260) assembled to the one or more PCBs, the switch connecting at each instant only one of the at least two metering ports to the same power meter.

11. The apparatus of any one of claims 1 to 10, wherein the processor (404) is configured to determine one or more of the following:

    based on the received measurement results, an actual power of the forward signal and an actual power of the backward signal and, optionally, wherein the processor is configured to determine the actual power of the forward and backward signals by a method comprising, or mathematically equivalent to: multiplying a predetermined $4 \times 4$ matrix by a measured 4 dimensional vector, each component of which is a result received from a respective one of the four ports;
    at least one property of the object based on the received measurement results; and
    based on the received measurement results, the ratio between the power of the real forward signal and the power of the real backward signal and a phase difference between the real forward signal and the real backward signal.

12. The apparatus of any one of claims 1 to 11, wherein the solid state power amplifier (104) is configured to be fed with RF signals having a variety of different frequencies; wherein the processor is configured to determine, for each of the variety of different frequencies, respective properties derivable from the scattering parameters of the cavity; and, optionally, wherein the processor is configured to select frequencies based on the respective properties determined for them, and send control signals to control the amplification of RF signals by the solid state power amplifier only at the selected frequencies.

13. The apparatus of any one of claims 1 to 12, wherein the heating unit is adapted to heat the object by microwaves; optionally, either: wherein the heating unit is adapted to heat the object by microwaves generated by a magnetron, or wherein the heating unit is adapted to heat the object by microwaves amplified by the solid state amplifier.

14. The apparatus of claim 13, wherein the heating unit is adapted to heat the object by microwaves amplified by the solid state amplifier and wherein the solid state amplifier outputs microwaves having power of at least 100W.

15. The apparatus of any one of claims 1 to 14, wherein the heating unit is adapted to heat the object by means other than microwave.

**Patentansprüche**

1. Vorrichtung (400) zum Erhitzen eines Objekts (402) durch eine Heizeinheit (406), wobei die Vorrichtung Folgendes umfasst:

   ein Festkörper-Mikrowellenmodul (100, 200, 200B, 300, 500), das eine oder mehrere gedruckte Leiterplatten, PCB, (102, 302) umfasst, wobei:
   ein Festkörper-Mikrowellen-Leistungsverstärker (104) an die eine oder die mehreren PCB montiert ist; und ein Koppler mit sechs Anschlüssen auf die eine oder die mehreren PCB gedruckt ist, wobei ein Anschluss des Kopplers mit sechs Anschlüssen über eine TEM- oder Quasi-TEM-Übertragungsleitung mit dem Leistungsverstärker verbunden ist; und
   einen Prozessor (404), der konfiguriert ist,

   Messergebnisse aus mindestens einem Leistungsmessgerät, das Eingaben von vier Anschlüssen des Kopplers mit sechs Anschlüssen empfängt, zu empfangen, und
   basierend auf den empfangenen Ergebnissen Steuersignale zum Steuern der Heizeinheit zu senden.

2. Vorrichtung (400) nach Anspruch 1, wobei ein Anschluss des Kopplers mit sechs Anschlüssen über eine TEM- oder Quasi-TEM-Übertragungsleitung mit einer Antennenschnittstelle (106) verbunden ist.

3. Vorrichtung (400) nach Anspruch 2, die ferner eine Mikrowellenantenne umfasst, die mit der Antennenschnittstelle (106) verbunden ist und konfiguriert ist, einen Heizhohlraum (401) mit Mikrowellen zu speisen.

4. Vorrichtung (400) nach einem der Ansprüche 1 bis 3, wobei der Prozessor (404) konfiguriert ist,

   die Messergebnisse unter Verwendung eines nichtiterativen Verarbeitungsverfahrens zu verarbeiten, um verarbeitete Ergebnisse zu erhalten, und
   die Steuersignale basierend auf den verarbeiteten Ergebnissen zu senden.

5. Vorrichtung nach einem der Ansprüche 1 bis 4, wobei die vier Anschlüsse (110, 120, 130, 140) vier verschiedene Linearkombinationen aus

   einem gemessenen Vorwärtssignal, das von dem Leistungsverstärker zu der Antenne verläuft, und
   einem gemessenen Rückwärtssignal, das von der Antenne zu dem Leistungsverstärker verläuft,

   an das mindestens eine Leistungsmessgerät koppeln.

6. Vorrichtung nach einem der Ansprüche 1 bis 5, wobei:

   der Koppler mit sechs Anschlüssen dafür ausgelegt ist, das Transformieren von Leistungsniveaus, die von dem mindestens einen Leistungsmessgerät gemessen worden sind, durch eine lineare Transformation, die eine Konditionszahl zwischen 4 und 5 aufweist, auf tatsächliche Leistungsniveaus zu erlauben; und/oder wobei die Gesamtlänge des Kopplers mit sechs Anschlüssen zwischen $\lambda/8$ und $\lambda/4$ liegt, wobei $\lambda$ eine Wellenlänge im Vakuum eines Mikrowellensignals ist, für dessen Verstärkung der Leistungsverstärker konfiguriert ist.

7. Vorrichtung nach einem der Ansprüche 1 bis 6, wobei sich ein Verhältnis zwischen einer Amplitude des Vorwärts- und des Rückwärtssignals an einem Anschluss von demselben Verhältnis an einem oder mehreren der anderen Anschlüsse unterscheidet.

8. Vorrichtung nach einem der Ansprüche 1 bis 7, wobei die vier Anschlüsse (110, 120, 130, 140) Folgendes umfassen:

   einen ersten Anschluss (120), der das gemessene Vorwärtssignal an des Leistungsmessgerät koppelt;
   einen zweiten Anschluss (130), der das gemessene Rückwärtssignal an das Leistungsmessgerät koppelt;
   einen dritten Anschluss (110) und einen vierten Anschluss (140), die jeweils eine Summe des gemessenen Vorwärtssignals und des gemessenen Rückwärtssignals an das Leistungsmessgerät koppeln; wobei der vierte Anschluss von dem dritten Anschluss um $\lambda/8$ beabstandet ist, wobei $\lambda$ eine Wellenlänge im Vakuum des Vorwärtssignals ist.

9. Vorrichtung nach Anspruch 8, wobei der erste Anschluss und der zweite Anschluss zusammen einen bidirektionalen Koppler bilden.

10. Vorrichtung nach einem der Ansprüche 1 bis 9, wobei mindestens zwei Messanschlüsse von den vier Messanschlüssen (110, 120, 130, 140) mit demselben Leistungsmessgerät verbunden sind und wobei die mindestens zwei der vier Anschlüsse durch einen Schalter (260), der an dem einen oder den mehreren PCB montiert ist, mit demselben Leistungsmessgerät verbunden sind, wobei der Schalter in jedem Moment nur einen der mindestens zwei Messanschlüsse mit demselben Leistungsmessgerät verbindet.

11. Vorrichtung nach einem der Ansprüche 1 bis 10, wobei der Prozessor (404) konfiguriert ist, eines oder mehrere des Folgenden zu bestimmen:

basierend auf den empfangenen Messergebnissen eine tatsächliche Leistung des Vorwärtssignals und eine tatsächliche Leistung des Rückwärtssignals, wobei der Prozessor wahlweise konfiguriert ist, die tatsächliche Leistung des Vorwärts- und des Rückwärtssignals durch ein Verfahren zu bestimmen, das Folgendes umfasst oder das mathematisch äquivalent ist zu: Multiplizieren einer vorbestimmten 4 x 4-Matrix mit einem gemessenen 4-dimensionalen Vektor, wobei jede Komponente von diesem einen Ergebnis entspricht, das von einem entsprechenden der vier Anschlüsse empfangen worden ist;
mindestens eine Eigenschaft des Objekts basierend auf den empfangenen Messergebnissen; und
basierend auf den empfangenen Messergebnissen das Verhältnis zwischen der Leistung des realen Vorwärtssignals und der Leistung des realen Rückwärtssignals und eine Phasendifferenz zwischen dem realen Vorwärtssignal und dem realen Rückwärtssignal.

12. Vorrichtung nach einem der Ansprüche 1 bis 11, wobei der Festkörper-Leistungsverstärker (104) konfiguriert ist, mit RF-Signalen gespeist zu werden, die mehrere unterschiedliche Frequenzen aufweisen; wobei der Prozessor konfiguriert ist, für jede der mehreren unterschiedlichen Frequenzen jeweils Eigenschaften zu bestimmen, die aus den Streuparametern des Hohlraums abgeleitet werden können; wobei der Prozessor wahlweise konfiguriert ist, Frequenzen basierend auf den entsprechenden Eigenschaften, die für sie bestimmt worden sind, auszuwählen und Steuersignale zu senden, um die Verstärkung des RF-Signals durch den Festkörper-Leistungsverstärker nur an den ausgewählten Frequenzen zu steuern.

13. Vorrichtung nach einem der Ansprüche 1 bis 12, wobei die Heizeinheit dafür ausgelegt ist, das Objekt durch Mikrowellen zu erhitzen; wobei wahlweise entweder:

die Heizeinheit dafür ausgelegt ist, das Objekt durch Mikrowellen, die durch ein Magnetron erzeugt werden, zu erhitzen, oder
die Heizeinheit dafür ausgelegt ist, das Objekt durch Mikrowellen, die durch den Festkörper-Verstärker verstärkt worden sind, zu erhitzen.

14. Vorrichtung nach Anspruch 13, wobei die Heizeinheit dafür ausgelegt ist, das Objekt durch Mikrowellen, die durch den Festkörper-Verstärker verstärkt worden sind, zu erhitzen, und wobei der Festkörper-Verstärker Mikrowellen ausgibt, die eine Leistung von mindestens 100 W haben.

15. Vorrichtung nach einem der Ansprüche 1 bis 14, wobei die Heizeinheit dafür ausgelegt ist, das Objekt durch andere Mittel als Mikrowellen zu erhitzen.


**Revendications**

1. Appareil (400) destiné à chauffer un objet (402) grâce à une unité de chauffage (406), l'appareil comprenant :

un module micro-ondes à semi-conducteur (100, 200, 200B, 300, 500) comprenant une ou plusieurs cartes à circuit imprimé, PCB, (102, 302), dans lequel :
un amplificateur de puissance micro-ondes à semi-conducteur (104) est assemblé à ce ou à ces cartes PCB, et un coupleur à six ports est imprimé sur la ou les cartes PCB, un port du coupleur à six ports étant relié à l'amplificateur de puissance par l'intermédiaire d'une ligne de transmission à propagation TEM ou quasi TEM, et
un processeur (404) configuré pour :

recevoir des résultats de mesure en provenance d'au moins un compteur de puissance recevant des entrées en provenance de quatre ports du coupleur à six ports, et

envoyer des signaux de commande pour piloter l'unité de chauffage sur la base des résultats reçus.

2. Appareil (400) selon la revendication 1, dans lequel un port du coupleur à six ports est relié à une interface d'antenne (106) par l'intermédiaire d'une ligne de transmission à propagation TEM ou quasi TEM.

3. Appareil (400) selon la revendication 2, comprenant en outre une antenne micro-ondes reliée à l'interface d'antenne (106) et configurée pour alimenter une cavité de chauffage (401) avec des micro-ondes.

4. Appareil (400) selon l'une quelconque des revendications 1 à 3, dans lequel le processeur (404) est configuré pour :

traiter les résultats de mesure en utilisant un procédé de traitement non itératif pour obtenir des résultats traités, et

envoyer les signaux de commande sur la base des résultats traités.

5. Appareil selon l'une quelconque des revendications 1 à 4, dans lequel les quatre ports (110, 120, 130, 140) couplent à ce ou ces compteurs de puissance quatre combinaison linéaire différent de :

un signal aller mesuré en provenance de l'amplificateur de puissance vers l'antenne, et

un signal retour mesuré en provenance de l'antenne vers l'amplificateur de puissance.

6. Appareil selon l'une quelconque des revendications 1 à 5, dans lequel :

le coupleur à six ports est agencé pour permettre la transformation de niveaux de puissance mesurés par le ou les compteurs de puissance en des niveaux réels de puissance grâce à une transformation linéaire présentant un nombre de condition compris entre 4 et 5, et/ou dans lequel :

la longueur totale du coupleur à six ports est comprise entre $\lambda / 8$ et $\lambda / 4$, $\lambda$ représentant la longueur d'onde dans le vide d'un signal micro-ondes que l'amplificateur de puissance est configuré pour amplifier.

7. Appareil selon l'une quelconque des revendications 1 à 6, dans lequel le rapport entre l'amplitude des signaux aller et retour au niveau d'un port est différent du même rapport au niveau d'un ou de plusieurs des autres ports.

8. Appareil selon l'une quelconque des revendications 1 à 7, dans lequel les quatre ports (110, 120, 130, 140) incluent :

un premier port (120) couplant le signal aller mesuré au compteur de puissance,

un deuxième port (130) couplant le signal retour mesuré au compteur de puissance,

un troisième port (110) et un quatrième port (140) couplant chacun au compteur de puissance la sommation du signal aller mesuré et du signal retour mesuré, le quatrième port étant distant du troisième port de $\lambda / 8$, $\lambda$ représentant la longueur d'onde dans le vide du signal aller.

9. Appareil selon la revendication 8, dans lequel le premier port et le deuxième port forment ensemble un coupleur bidirectionnel.

10. Appareil selon l'une quelconque des revendications 1 à 9, dans lequel au moins deux ports de comptage parmi les quatre ports de comptage (110, 120, 130, 140) sont reliés au même compteur de puissance, et dans lequel au moins deux des quatre ports sont connectés au même compteur de puissance par l'intermédiaire d'un interrupteur (260) assemblé à cette ou à ces cartes PCB, l'interrupteur connectant à chaque instant un seul des deux ports de comptage ou plus au même compteur de puissance.

11. Appareil selon l'une quelconque des revendications 1 à 10, dans lequel le processeur (404) est configuré pour déterminer au moins l'un des critères suivants :

sur la base des résultats de mesure reçus, la puissance réelle du signal aller et la puissance réelle du signal retour, dans lequel le processeur est configuré pour déterminer la puissance réelle des signaux aller et retour grâce à un procédé comprenant, ou bien équivalent mathématiquement à : la multiplication d'une matrice 4 X 4 prédéterminée par un vecteur à 4 dimensions mesuré, chaque composante étant le résultat reçu de l'un respectif des quatre ports,

au moins une propriété de l'objet sur la base des résultats de mesure reçus, et

sur la base des résultats de mesure reçus, le rapport entre la puissance du signal aller réel et la puissance du signal retour réel ainsi que la différence de phases entre le signal aller réel et le signal retour réel.

12. Appareil selon l'une quelconque des revendications 1 à 11, dans lequel l'amplificateur de puissance à semi-conducteur (104) est configuré pour être alimenté par des signaux RF présentant diverses fréquences différentes, le processeur étant configuré pour déterminer, pour chacune des diverses fréquences différentes, des propriétés respectives qui peuvent être déduites de paramètres de diffusion de la cavité, et, en option, dans lequel le processeur est configuré pour sélectionner des fréquences sur la base des propriétés respectives déterminées pour celles-ci, et pour envoyer des signaux de commande afin de ne piloter qu'aux fréquences sélectionnées l'amplification de signaux RF par l'intermédiaire de l'amplificateur de puissance à semi-conducteur.

13. Appareil selon l'une quelconque des revendications 1 à 12, dans lequel l'unité de chauffage est conçue pour chauffer l'objet par des micro-ondes, en option :

l'unité de chauffage étant conçue pour chauffer l'objet par des micro-ondes générées par un magnétron, ou
l'unité de chauffage étant conçue pour chauffer l'objet par des micro-ondes amplifiées par l'amplificateur à semi-conducteur.

14. Appareil selon la revendication 13, dans lequel l'unité de chauffage est conçue pour chauffer l'objet par des micro-ondes amplifiées par l'amplificateur à semi-conducteur, l'amplificateur à semi-conducteur délivrant des micro-ondes présentant une puissance d'au moins 100 W.

15. Appareil selon l'une quelconque des revendications 1 à 14, dans lequel l'unité de chauffage est conçue pour chauffer l'objet grâce à un moyen différent des micro-ondes.

FIG. 1

FIG. 2A

FIG. 2B

F+B   F   $F+e^{i\frac{2\pi}{3}}B$   $F+e^{i\frac{4\pi}{3}}B$

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2199753 A
- WO 03090313 A
- EP 1471773 A
- EP 1676463 A